(19) **Europäisches Patentamt / European Patent Office / Office européen des brevets**

(11) **EP 4 629 563 A1**

(12) **EUROPEAN PATENT APPLICATION**
published in accordance with Art. 153(4) EPC

(43) Date of publication:
08.10.2025 Bulletin 2025/41

(21) Application number: 24853532.0

(22) Date of filing: 26.07.2024

(51) International Patent Classification (IPC):
*H04L 9/40* (2022.01)

(52) Cooperative Patent Classification (CPC):
H04L 9/40; H04L 41/0893

(86) International application number:
PCT/CN2024/107934

(87) International publication number:
WO 2025/036120 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.08.2023 CN 202311027622

(71) Applicant: ZTE CORPORATION
Shenzhen, Guangdong 518057 (CN)

(72) Inventor: WANG, Cheng
Shenzhen, Guangdong 518057 (CN)

(74) Representative: Cristinelli, Luca et al
Jacobacci & Partners S.p.A.
Corso Emilia, 8
10152 Torino (IT)

(54) **DATA TRANSMISSION METHOD, AND COMPUTER-READABLE STORAGE MEDIUM AND ELECTRONIC APPARATUS**

(57) A data transmission method, a computer-readable storage medium and an electronic apparatus. The method comprises: acquiring target data to be transmitted, wherein the target data contains at least two pieces of sub-data; performing security classification on data content corresponding to the target data, to determine security level information corresponding to at least two parts of content in the data content, wherein the security level information is used for indicating a security level corresponding to each piece of sub-data; and according to the security level information, determining at least two target network slices from a plurality of network slices of different slice classifications, and sending a data transmission request to the at least two target network slices.

Fig. 2

EP 4 629 563 A1

**Description**

**Cross-Reference to Related Disclosure**

Embodiments of the present disclosure are based on Chinese Patent Disclosure no. 2023110276229 filed on August 14, 2023 and entitled "Data Transmission Method, and Computer-Readable Storage Medium and Electronic Apparatus",, and claims priority to the patent disclosure, the disclosure of which is incorporated herein by reference in its entirety.

**Technical Field**

Embodiments of the present disclosure relate to the field of communications, and in particular, to a data transmission method, a computer-readable storage medium, and an electronic apparatus.

**Background**

5G network slicing technology, at its simplest understanding, is a network which slices a physical network into a plurality of virtual end-to-end networks. Each virtual network, including devices, access, transmission and core networks in the network, is logically independent, and failure of any one virtual network will not affect the other virtual networks. Each virtual network has different functional features, and is oriented to different requirements and services. The 5G network slicing technology brings the following values: the quality of service of different levels of services, including traditional network indexes such as bandwidth, delay, packet loss and jitter, is ensured; a user can obtain a logically independent network, thereby avoiding network risks while avoiding data leakage; and the user can view network statistical indexes and status related to his/her own slice package.

However, in a data transmission scenario under the 5G network slicing technology, data to be transmitted is generally taken as a whole, and one network slice of a security level is selected for transmission of the data to be transmitted; but transmission of the whole data generally cannot meet a data transmission requirement of finer granularity, thereby causing a problem of low security of data transmission. Therefore, there is a problem that the security of data transmission is low.

In view of the problem above, no effective solution has been proposed.

**Summary**

Embodiments of the present disclosure provide a data transmission method, a computer-readable storage medium, and an electronic apparatus.

According to some embodiments of the present disclosure, provided is a data transmission method, including: target data to be transmitted is acquired; security classification is performed on data content corresponding to the target data, to determine security level information corresponding to at least two parts of content in the data content, wherein the security level information is used for indicating a security level; at least two target network slices are determined from a plurality of network slices of different slice classifications according to the security level information, wherein each of the target network slices is a network slice of which a slice classification matches a security level corresponding to each piece of data content in the at least two parts of content, and network slices of different slice classifications correspond to different security levels; and data transmission is performed on the data content of the target data by means of target network slices, of which the security levels match those of the data content, in the at least two target network slices.

According to some embodiments of the present disclosure, provided is another data transmission method, including: target data subjected to data transmission of different data content by a second client via at least two target network slices is acquired, wherein the second client is a transmission sender of the target data, and the at least two target network slices are network slices determined by the second client from a plurality of network slices of different slice classifications according to the security level information; the security level information is obtained by the second client performing security classification on data content corresponding to the target data, and is used for indicating security level information corresponding to least two parts of content in the data content, and each of the target network slices is a network slice of which the slice classification matches a security level corresponding to each piece of data content in the at least two parts of content.

According to some embodiments of the present disclosure, provided is a data transmission apparatus, including: a first acquisition unit, configured to acquire target data to be transmitted; a classification unit, configured to perform security classification on data content corresponding to the target data, to determine security level information corresponding to at least two parts of content in the data content, wherein the security level information is used for indicating security levels corresponding to the least two parts of content in the data content; a grading unit, configured to determine at least two target network slices from a plurality of network slices of different slice classifications according to the security level information, wherein each of the target network slices is a network slice of which a slice classification matches a security level corresponding to each piece of data content in the at least two parts of content, and network slices of different slice classifications correspond to different security levels; and a transmission unit, configured to perform data transmission on the data content of the target data by means of target network slices, of which the security levels match those of the data content, in the at least two target network slices.

According to some embodiments of the present disclosure, provided is another data transmission apparatus, including: a third acquisition unit, configured to acquire target data subjected to data transmission of different data content by a second client via at least two target network slices, wherein the second client is a transmission sender of the target data, and the at least two target network slices are network slices determined by the second client from a plurality of network slices of different slice classifications according to the security level information; the security level information is obtained by the second client performing security classification on data content corresponding to the target data, and is used for indicating security level information corresponding to least two parts of content in the data content, and each of the target network slices is a network slice of which the slice classification matches a security level corresponding to each piece of data content in the at least two parts of content.

According to still some other embodiments of the present disclosure, provided is a computer-readable storage medium, having a computer program stored therein, wherein the computer program is configured to execute, when running, the steps in any one of the described method embodiments.

According to still some other embodiments of the present disclosure, provided is an electronic apparatus, including a memory and a processor, wherein the memory stores a computer program, and the processor is configured to run the computer program to execute the steps in any one of the method embodiments above.

**Brief Description of the Drawings**

Fig. 1 is a schematic structural diagram of an optional data transmission method according to embodiments of the present disclosure;

Fig. 2 is a flowchart of an optional data transmission method according to embodiments of the present disclosure;

Fig. 3 is a schematic diagram of an optional data transmission method according to embodiments of the present disclosure;

Fig. 4 is a schematic diagram of another optional data transmission method according to embodiments of the present disclosure;

Fig. 5 is a schematic diagram of another optional data transmission method according to embodiments of the present disclosure;

Fig. 6 is a schematic diagram of another optional data transmission method according to embodiments of the present disclosure; and

Fig. 7 is a structural block diagram of an optional data transmission apparatus according to embodiments of the present disclosure.

**Detailed Description of the Embodiments**

Hereinafter, embodiments of the present disclosure are described in detail with reference to the accompanying drawings and in conjunction with the embodiments.

It is to be noted that the terms "first", "second", etc. in the description, claims and drawings of the present disclosure are used to distinguish similar objects, and are not necessarily used to describe a specific sequence or a precedence order.

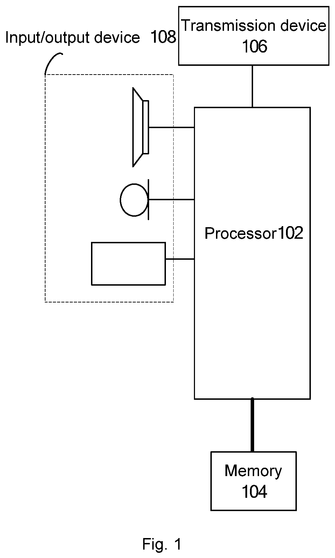

The method embodiments provided in the embodiments of the present disclosure can be executed in a mobile terminal, a computer terminal or a similar computing apparatus. Taking the method embodiments being executed on a mobile terminal as an example, Fig. 1 is a hardware structural block diagram of a mobile terminal of a data transmission method according to embodiments of the present disclosure. As shown in Fig. 1, the mobile terminal may include: one or more (Fig. 1 shows only one) processors 102 (the processors 102 may include, but not limited to processing apparatus such as a micro processor, MCU or a programmable logic device, FPGA); and a memory 104 configured to store data; wherein the mobile terminal can further include a transmission device 106 and an input/output device 108 for communication functions. A person of ordinary skill in the art would understand that the structure as shown in Fig. 1 is merely exemplary, and does not limit the structure of the mobile terminal. For example, the mobile terminal may also include more or fewer assemblies than those shown in Fig. 1, or have different configuration from that shown in Fig. 1.

The memory 104 may be configured to store a computer program, for example, a software program and module of application software, such as a computer program corresponding to the data transmission method in the embodiments of the present disclosure; and the processor 102 executes all functional applications and data processing by running the computer program stored in the memory 104, i.e. implementing the described method. The memory 104 may include a high-speed random access memory, and may also include a non-transitory memory, such as one or more magnetic storage apparatuses, flash memories or other non-transitory solid-state memories. In some examples, the memory 104 may further include memories remotely arranged with respect to the processors 102, and these remote memories may be connected to the mobile terminal via a network. Examples of the network include, but are not limited to the Internet, an intranet, a local area network, a mobile communication network and combinations thereof.

The transmission device 106 is configured to receive or send data via a network. Specific examples of the network may include a wireless network provided by a communication provider of the mobile terminal. In one example, the transmission device 106 includes a network adapter (Network Interface Controller, NIC) which may be connected to other network devices by means of a base station, thereby being able to communicate with the Internet. In one example, the transmission device 106 may be a Radio Frequency (RF) module which is configured to communicate with the Internet in a wireless manner.

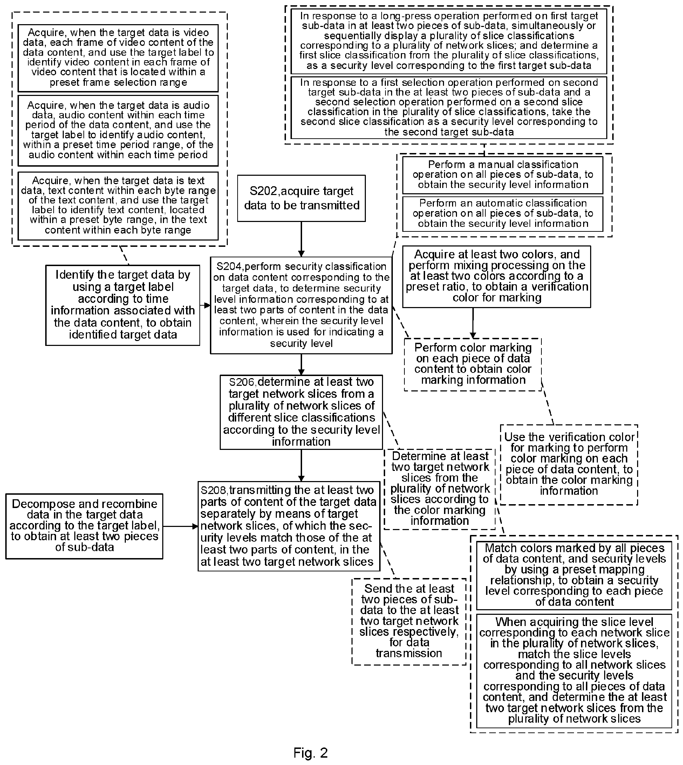

Optionally, as some optional embodiments, as shown in Fig. 2, the data transmission method can be executed by a mobile terminal, a computer terminal or a similar computing apparatus, and the specific steps include:

S202: acquiring target data to be transmitted;

S204: performing security classification on data content corresponding to the target data, to determine security level information corresponding to at least two parts of content in the data content, wherein the security level information is used for indicating a security level;

S206: determining at least two target network slices from a plurality of network slices having different slice security levels according to the security level information, wherein each of the at least two target network slices is a network slice of which the slice security level matches a security level of each piece of data content in the at least two parts of content; and

S208: transmitting the at least two parts of content of the target data separately by means of target network slices, of which the security levels match those of the at least two parts of content, in the at least two target network slices.

Optionally, in the present embodiment, an illumination rendering method for a virtual model as described above may be applied to, but not limited to, a network slicing technology scenario; wherein the network slicing technology may be but not limited to, slicing one physical network into a plurality of virtual end-to-end networks, and each virtual network, including devices, access, transmission and core networks in the network, is logically independent, and failure of any one virtual network will not affect the other virtual networks. Each virtual network has different functional features, and is oriented to different requirements and services. The network slicing technology brings the following values: the quality of service of different levels of services, including traditional network indexes such as bandwidth, delay, packet loss and jitter, is ensured; a user can obtain a logically independent network, thereby avoiding network risks while avoiding data leakage; and the user can view network statistical indexes and status related to his/her own slice package.

However, the network slicing technology, as an on-demand customized end-to-end logical network, involves multiple domains such as wireless, transmission, core network, and management. If all permutations and combination are performed according to the capabilities in all domains, many options will be formed; and how to enable industries to recognize the slicing capabilities more clearly and optimally align same with a majority of industry applications is a problem to be solved.

However, no matter how clearly the slicing capabilities are recognized and optimally aligned with most industry applications, if the logic remains restricted to overall data, then multiple local sub-data still cannot be fully satisfied. For example, target data is composed of sub-data 1, sub-data 2, and sub-data 3, if the target data is taken as a whole for judgment, a network slice with security level 2 is selected for transmitting the target data; however, selection of the security level 2 is judged by taking the target data as a whole, but there may be a great difference in the requirements of the sub-data for the security level. For example, the sub-data 1 has a higher requirement for the security level, and the sub-data 2 and the sub-data 3 have a lower requirement for the security level, and then the obtained security level 2 is merely an average security level, and may meet security level requirements of the sub-data 2 and the sub-data 3, but does not meet the security level requirement of the sub-data 1, which makes it difficult to ensure the security of the sub-data 1.

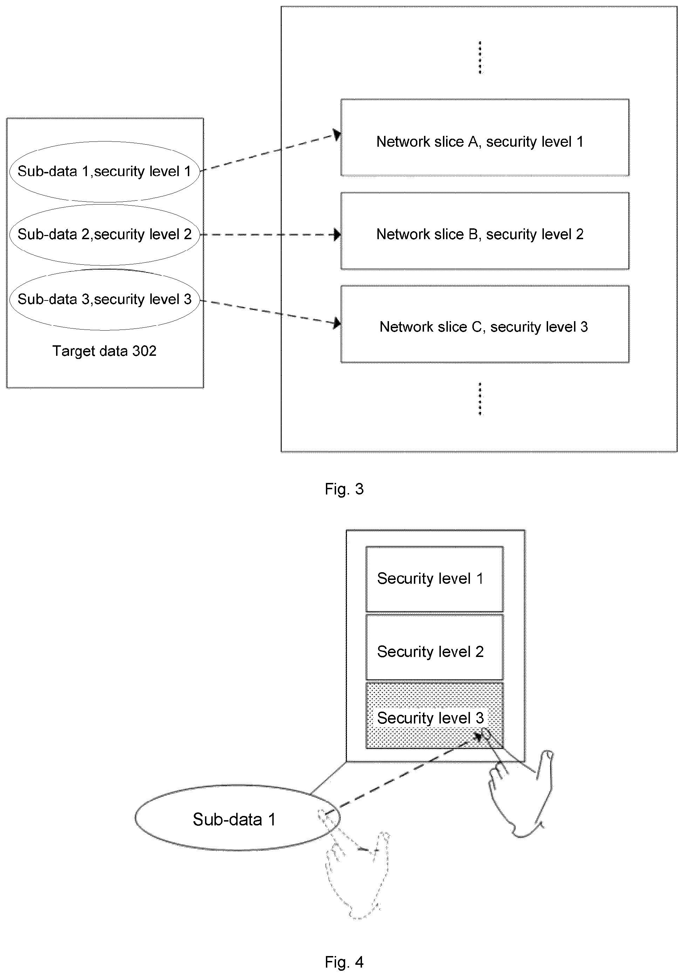

Optionally, in the present embodiment, the security level information is used for indicating a security level corresponding to each piece of sub-data, and network slices of different slice classifications correspond to different security levels. As shown in Fig. 3, the target data 302 contains a plurality of sub-data, such as sub-data 1, sub-data 2 and sub-data 3; wherein sub-data 1 with security level 1 will use network slice A of the same security level for data transmission, sub-data 2 with security level 2 will use network slice B of the same security level for data transmission, and sub-data 3 with security level 3 will use network slice C of the same security level for data transmission.

Optionally, in the present embodiment, a data transmission request is sent to the at least two target network slices, and the target network slices assist in completing the transmission of the target data; wherein the data transmission request is used for requesting the at least two target network slices to transmit each piece of sub-data according to a matching situation between security levels corresponding to the sub-data and slice classifications, that is, when the target data includes sub-data of at least two different security levels, the target data is transmitted in a manner of being split into a plurality of sub-data, to ensure that each piece of sub-data can match a network slice of the same security level, thereby overcoming the security defect caused by overall data transmission.

It should be noted that, in the data transmission stage, the whole target data is split into local sub-data, and security classification of finer granularity is performed on the sub-data, to determine a security level of each piece of sub-data; and further network slices of different slice classifications are allocated to the sub-data of different security levels, thereby providing a targeted data transmission mode for each piece of sub-data, to ensure the transmission security of each piece of sub-data.

By way of further example, an optional example is as shown in Fig. 3, target data 302 to be transmitted is acquired, wherein the target data 302 contains at least two pieces of sub-data, such as sub-data 1, sub-data 2 and sub-data 3; and security classification is performed on each piece of sub-data in the target data 302, to obtain security level information; wherein the security level information is used for indicating a security level corresponding to each piece of sub-data, for example, the sub-data 1 corresponds to security level 1, the sub-data 2 corresponds to security level 2, and the sub-data 3 corresponds to security level 3. Further, according to the security level information, at least two target network slices (such as network slice A, network slice B and network slice C) are determined from a plurality of network slices of different slice classifications, and a data transmission request is sent to the at least two target network slices; wherein each of the target network slices is a network slice of which a slice classification matches a security level corresponding to each piece of sub-data, and network slices of different slice classifications correspond to different security levels; and the data transmission request is used for requesting the at least two target network slices to transmit each piece of sub-data according to a matching situation between security levels corresponding to the sub-data and slice classifications. For example, the data transmission request is used to request performing data transmission on the sub-data 1 with security level 1 using network slice A of the same security level, to perform data transmission on the sub-data 2 with security level 2 using network slice B of the same security level, and to perform data transmission on the sub-data 3 with security level 3 using network slice C of the same security level.

By the embodiments provided in the present disclosure, in the data transmission stage, the whole target data is split into local sub-data, and security classification of finer granularity is performed on the sub-data, to determine a security level of each sub-data; and further network slices of different slice classifications are allocated to the sub-data of different security levels, thereby providing a targeted data transmission mode for each piece of sub-data, to ensure the transmission security of each piece of sub-data. Therefore, the problem of reduced security of data transmission can be solved, and the technical effect of improving the security of data transmission can be achieved.

As an optional solution, as shown in Fig. 2, before security classification is performed on data content corresponding to the target data, to determine security level information corresponding to at least two parts of content in the data content, the method further includes: according to time information associated with the data content, a target label is used to identify the target data, to obtain identified target data; wherein the target label is used for marking data corresponding to each piece of data content of at least two parts of content in the target data.

Before data transmission is performed on the data content of the target data by means of target network slices, of which the security levels match those of the data content, in the at least two target network slices, the method further includes: data in the target data is decomposed and recombined according to the target label, to obtain at least two pieces of sub-data; wherein the sub-data is data corresponding to each piece of data content in the at least two parts of content in the target data.

Data transmission is performed on the data content of the target data by means of target network slices, of which the security levels match those of the data content, in the at least two target network slices, includes: the at least two pieces of sub-data are sent to the at least two target network slices respectively, for data transmission.

As an optional solution, as shown in Fig. 2, according to time information associated with the data content, a target label is used to identify the target data, to obtain identified target data, includes:

when the target data is video data, each frame of video content of the data content is acquired, and a target label is used to identify video content in each frame of video content that is located within a preset frame selection range, wherein the time information includes information of the preset frame selection range; or

when the target data is audio data, audio content within each time period of the data content is acquired, and a target label is used to identify audio content, within a preset time period range, of the audio content within each time period, wherein the time information includes information for indicating the preset time period range; or

when the target data is text data, text content within each byte range of the text content is acquired, and a target label is used to identify text content, located within a preset byte range, in the text content within each byte range, wherein the time information includes information for indicating the preset byte range.

As an optional solution, as shown in Fig. 2, security classification is performed on data content corresponding to the target data, to determine security level information corresponding to at least two parts of content in the data content, includes: color marking is performed on each piece of data content to obtain color marking information, wherein the color marking information is used for recording colors marked by all pieces of data content, data content marked with different colors corresponds to different security levels, and the security level information includes the color marking information.
According to the security level information, at least two target network slices are determined from a plurality of network slices of different slice classifications, includes: at least two target network slices are determined from the plurality of network slices according to the color marking information.
It should be noted that the color marking itself has a high intuitive characteristic, which helps the user to select or view the security level more intuitively. In addition, the association between the color itself and the data transmission is small, such that when an illegal user steals or destroys the data transmission, a relevant illegal operation is also performed regarding the color, thereby further improving the security of the data transmission.
By the embodiments provided in the present disclosure, color marking is performed on each piece of sub-data to obtain the color marking information, wherein the color marking information is used for recording colors marked by all pieces of sub-data, sub-data marked with different colors corresponds to different security levels, and the security level information includes the color marking information; and according to the color marking information, at least two target network slices are determined from the plurality of network slices, and a data transmission request is sent to the at least two target network slices, thereby achieving the technical effects of facilitating the user to select or view the security level more intuitively, and further improving the security of the data transmission.
As an optional solution, as shown in Fig. 2, before color marking is performed on each piece of data content to obtain color marking information, the method further includes: at least two colors are acquired, and mixing processing is performed on the at least two colors according to a preset ratio, to obtain a verification color for marking.
Color marking is performed on each piece of data content to obtain color marking information, includes: the verification color for marking is used to perform color marking on each piece of data content, to obtain the color marking information.
As an optional solution, as shown in Fig. 2, at least two target network slices are determined from the plurality of network slices according to the color marking information, includes:

colors marked by all pieces of data content, and security levels are matched by using a preset mapping relationship, to obtain a security level corresponding to each piece of data content; and

when the slice level corresponding to each network slice in the plurality of network slices is acquired, the slice levels corresponding to all network slices and the security levels corresponding to all pieces of data content are matched, and the at least two target network slices are determined from the plurality of network slices.

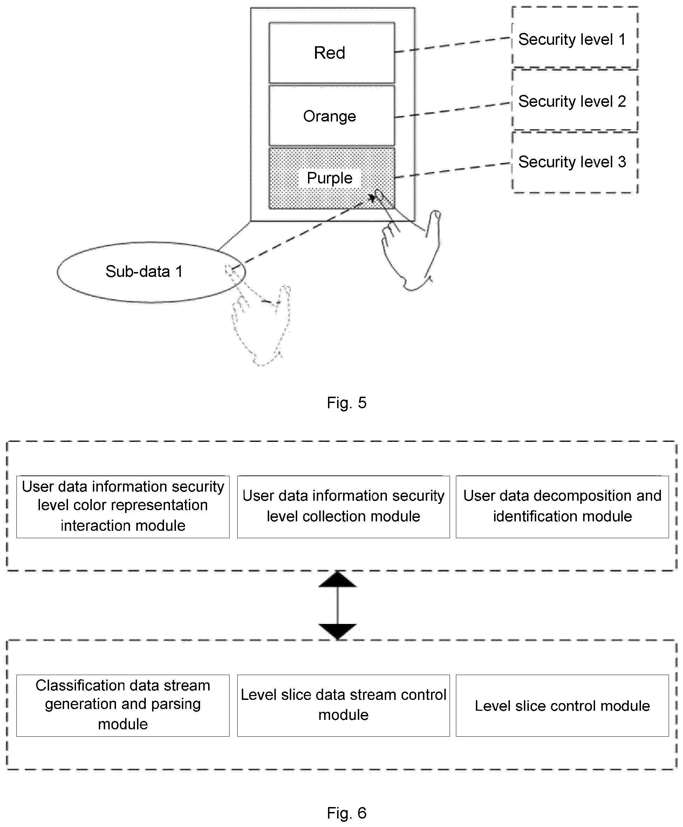

By way of further example, optionally, based on the scenario shown in Fig. 4, continuing to refer to Fig. 5, according to the preset mapping relationship, a color label being red corresponds to security level 1, a color label being orange corresponds to security level 2, and a color label being purple corresponds to security level 3.
By the embodiments provided in the present disclosure, colors marked by all pieces of sub-data, and security levels are matched by using the preset mapping relationship, to obtain a security level corresponding to each piece of sub-data; when the slice level corresponding to each network slice in the plurality of network slices is acquired, the slice levels corresponding to all network slices and the security levels corresponding to all pieces of sub-data are matched, and the at least two target network slices are determined from the plurality of network slices; and a data transmission request is sent to the at least two target network slices, thereby achieving the technical effects of facilitating the user to select or view the security level more intuitively, and further improving the security of the data transmission.
As an optional solution, as shown in Fig. 2, security classification is performed on data content corresponding to the target data, to determine security level information corresponding to at least two parts of content in the data content, includes:

S1: a manual classification operation is performed on all pieces of sub-data to obtain the security level information; or

S2: an automatic classification operation is performed on all pieces of sub-data to obtain the security level information.

It should be noted that, in order to improve the execution flexibility of the classification operation, security classification is sub-divided into a manual classification operation and an automatic classification operation, wherein the manual classification operation may be understood as, but is not limited to the user manually performing security classification on all pieces of sub-data, and the automatic classification operation may be understood as automatically performing, for the user, security classification on all pieces of sub-data.

By the embodiments provided in the present disclosure, a manual classification operation is performed on all pieces of sub-data to obtain the security level information; or an automatic classification operation is performed on all pieces of sub-data to obtain the security level information, to achieve the purpose of sub-dividing the security classification into a manual classification operation and an automatic classification operation, thereby achieving the technical effect of improving the execution flexibility of the classification operation.

As an optional solution, as shown in Fig. 2, a manual classification operation is performed on all pieces of sub-data to obtain the security level information, includes:

S1: in response to a long-press operation performed on first target sub-data in the at least two pieces of sub-data, a plurality of slice classifications corresponding to the plurality of network slices are simultaneously or sequentially displayed; and a first slice classification is determined from the plurality of slice classifications, as a security level corresponding to the first target sub-data; or

S2: in response to a first selection operation performed on second target sub-data in the at least two pieces of sub-data and a second selection operation performed on a second slice classification in the plurality of slice classifications, the second slice classification is taken as a security level corresponding to the second target sub-data.

It should be noted that the manual classification operation can improve the selection accuracy of the security level of the sub-data, and the selected security level better meets user requirements; however, the manual classification operation also decreases the selection efficiency of the security level, and thus in this embodiment, a plurality of execution modes for the manual classification operation are provided, such that the user can select a most suitable execution mode according to operation habits thereof, to effectively complete the manual classification operation.

By way of further example, an optional example is as shown in Fig. 4, in response to a long-press operation performed on first target sub-data (e.g. sub-data 1) in the at least two pieces of sub-data, a plurality of slice classifications (e.g. security level 1, security level 2 and security level 3) corresponding to the plurality of network slices are simultaneously or sequentially displayed; and; security level 3 (first slice classification) is determined from the plurality of slice classifications, as a security level corresponding to the sub-data 1 (the first target sub-data).

By the embodiments provided in the present disclosure, in response to a long-press operation performed on first target sub-data in the at least two pieces of sub-data, a plurality of slice classifications corresponding to the plurality of network slices are simultaneously or sequentially displayed; and a first slice classification is determined from the plurality of slice classifications, as a security level corresponding to the first target sub-data; or in response to a first selection operation performed on second target sub-data in the at least two pieces of sub-data and a second selection operation performed on a second slice classification in the plurality of slice classifications, the second slice classification is taken as a security level corresponding to the second target sub-data, thereby achieving the technical effect of improving the selection accuracy of the security level of the sub-data.

As an optional solution, target data to be transmitted is acquired, includes: the target data associated with a target account is acquired.

An automatic classification operation is performed on all pieces of sub-data to obtain the security level information, includes:

historical security levels corresponding to historical data that has been transmitted of the target account are acquired;

statistics is performed on the historical data by using the historical security levels, to obtain first key data, wherein the first key data corresponds to multiple times of same or similar historical security levels; and

when the target data includes the first key data, security levels corresponding to the first key data included in the target data are automatically determined as the same or similar historical security levels, or the first key data is highlighted in the target data, and the security levels corresponding to the first key data are prompted to be the same or similar historical security levels.

It should be noted that the automatic classification operation can increase the selection efficiency of the security level of the sub-data; however, the automatic classification operation also reduces the selection accuracy of the security level, and thus in this embodiment, statistics is performed on the historical data in consideration of the historical security levels, to obtain sub-data for which the same security level is selected during multiple preceding manual classification operations of the user, thereby ensuring the selection accuracy of the security level of the sub-data while increasing the selection efficiency of the security level of the sub-data.

By the embodiments provided in the present disclosure, historical security levels corresponding to historical data that has been transmitted of the target account are acquired; statistics is performed on the historical data by using the historical security levels, to obtain first key data, wherein the first key data corresponds to multiple times of same or similar historical security levels; and when the target data includes the first key data, security levels corresponding to the first key data included in the target data are automatically determined as the same or similar historical security levels, or the first key data is highlighted in the target data, and the security levels corresponding to the first key data are prompted to be the same or similar historical security levels, which achieves an object, thereby achieving a technical effect.

As an optional solution, an automatic classification operation is performed on all pieces of sub-data to obtain the security level information, includes:

S1: data reference information of all pieces of sub-data is acquired, wherein the data reference information includes at least one of: data source information, data type information and data protocol information; and

S2: an automatic classification operation is performed on all pieces of sub-data based on the data reference information, to obtain the security level information.

Optionally, in the present embodiment, the data reference information may be understood as, but is not limited to, information of different dimensions based on which the automatic classification operation is executed, and the more dimensions the data reference information has, the higher execution accuracy the automatic classification operation has, but the execution efficiency of the automatic classification operation also decreases; and thus the data source information, data type information, and data protocol information may be selected as required, to take into account the execution accuracy and efficiency of the automatic classification operation.

Optionally, in the present embodiment, the data source information may be but is not limited to indicating the source of sub-data, and if the sub-data is derived from a relevant application or platform related to data security, a security level of the sub-data needs to be increased; the data type information may be but is not limited to indicating the type of sub-data, and if the sub-data itself belongs to a data type having a high requirement for security level, and relates to security information, virtual resources, etc., and thus the sub-data needs to be set with a high security level; and the data protocol information may be but is not limited to indicating a protocol type of sub-data, for example, when the sub-data uses an https protocol, a higher security level may be allocated.

By the embodiments provided in the present disclosure, data reference information of all pieces of sub-data is acquired, wherein the data reference information includes at least one of: data source information, data type information and data protocol information; and an automatic classification operation is performed on all pieces of sub-data based on the data reference information, to obtain the security level information, thereby achieving the technical effect of taking into account both the execution accuracy and efficiency of the automatic classification operation.

As an optional solution, before the data transmission request is sent to the at least two target network slices, the method further includes:

all pieces of sub-data are recombined into data streams to be transmitted of different security levels, and a target label is configured for each of the data streams to be transmitted, wherein data content of the target label includes a color representation value.

It should be noted that independent sub-data generally does not conform to a data transmission format, or cannot stably perform data transmission, and thus in order to ensure the stability of data transmission, all pieces of sub-data are recombined into data streams to be transmitted of different security levels; in addition, in order to ensure that the matched network slices can be smoothly used for completing data transmission, a target label is also configured for each of the data streams to be transmitted, wherein data content of the target label includes a color representation value.

By the embodiments provided in the present disclosure, all pieces of sub-data are recombined into data streams to be transmitted of different security levels, and a target label is configured for each of the data streams to be transmitted, wherein data content of the target label includes a color representation value, thereby achieving the technical effect of ensuring the stability of data transmission.

As an optional solution, after according to the security level information, at least two target network slices are determined from a plurality of network slices of different slice classifications, and a data transmission request is sent to the at least two target network slices, the method further includes:

S1: transmission feedback information returned by a first client is acquired, wherein the transmission feedback information carries an actual security level corresponding to each piece of sub-data when the first client receives the target data, and the first client is a transmission receiver of the target data; and

S2: the actual security level corresponding to each piece of sub-data and the security level corresponding to each piece of sub-data are verified, and sub-data having difference in the actual security level is taken as anomalous data.

It should be noted that, in order to further improve the security of data transmission, a feedback mechanism is provided in this embodiment; when the actual security level carried in the transmission feedback information returned by the first client is inconsistent with the security level set at the beginning of the data transmission, it may be considered that problems such as data tampering, data destruction, and data theft exist in the data transmission process; and then the sub-data is taken as anomalous data, to make related reactions in time, thereby minimizing the loss of data anomalies.

By the embodiments provided in the present disclosure, transmission feedback information returned by a first client is acquired, wherein the transmission feedback information carries an actual security level corresponding to each piece of sub-data when the first client receives the target data, and the first client is a transmission receiver of the target data; and the actual security level corresponding to each piece of sub-data and the security level corresponding to each piece of sub-data are verified, and sub-data having a difference in the actual security level is taken as anomalous data, thereby achieving the object of providing a feedback mechanism for data transmission, and achieving the technical effect of improving the security of data transmission.

Optionally, as some other optional embodiments, the data transmission method can be executed by a mobile terminal, a computer terminal or a similar computing apparatus, and the specific steps include: target data subjected to data transmission of different data content by a second client via at least two target network slices is acquired; wherein the second client is a transmission sender of the target data, and the at least two target network slices are network slices determined by the second client from a plurality of network slices of different slice classifications according to security level information; the security level information is obtained by the second client performing security classification on data content corresponding to the target data, and is used for indicating security level information corresponding to least two parts of content in the data content, and each of the target network slices is a network slice of which the slice classification matches a security level corresponding to each piece of data content in the at least two parts of content.

For specific embodiments, reference may be made to the examples shown in the illumination rendering method for a virtual model as described above, and details will not repeated herein in this example.

As an optional solution, target data subjected to data transmission of different data content by a second client via at least two target network slices is acquired, includes: at least two pieces of sub-data transmitted by the at least two target network slices respectively are acquired, wherein the sub-data is data corresponding to each piece of data content in the at least two parts of content in the target data.

After at least two pieces of sub-data transmitted by the at least two target network slices respectively are acquired, the method further includes: the at least two pieces of sub-data are parsed and restored, to obtain the target data, and an actual security level corresponding to each piece of data content; and

the actual security level is returned to the second client in the form of transmission feedback information, and the second client verifies the actual security level corresponding to each piece of data content and the security level corresponding to each piece of data content, and takes data content having a difference in the actual security level as anomalous data content.

As an optional solution, after the at least two pieces of sub-data are parsed and restored, to obtain the target data, and an actual security level corresponding to each piece of data content, the method further includes: important data content of which the actual security level is greater than or equal to a first preset threshold is determined from the at least two pieces of data content, and at least one of the following steps is executed on the important data content:

when a display duration of the important data content is greater than or equal to a second preset threshold, the important data content is destroyed;

when a target account which requests to display the important data content is an unauthenticated account, fuzzy displaying is performed on the important data content; and

the important data content is put into a secure partition for storage.

As an optional solution, for ease of understanding, the data transmission method is applied to a slice-connected 5G network scenario and a terminal device supporting a 5G slicing technology. For example, the present embodiment is applied to devices having wired and wireless data transmission capabilities, including a mobile phone, a CPE, a data card, etc., and is applied to application programs based on data devices, and the present embodiment is employed during data transmission. The present embodiment can also be applied to existing technical scenarios, and in the existing application scenarios, the transmission of color identify/mark information is carried out through existing data channels, and strictly speaking, security levels of existing data channels are, from large to small: VPN connection, cellular connection, strongly-encrypted hotspot connection or common Wi-Fi connection; and future application scenarios are networks that support security slice levels, and the present embodiment can be applied when relating to deployment.

It should be noted that the present embodiment solves the described problem from the perspective of underlying data transmission regarding four problems of privacy leakage of user data access, and eavesdropping, spoofing and tampering of data transmission, and the technical means adopted in the present embodiment is: proposed is a technical method of a user visually using classification slices and quickly confirming whether data leakage occurs, in which according to visual color settings of a user on encrypted data segments, a terminal uses data information of different security levels to correspond to network slices (such as 5G network slices) of different security levels, and uses the network slices of different security levels to transmit data simultaneously; when a group of information starts to be transmitted, a verification color of the whole data information sent is set according to the visual color settings of different data segments; after a receiving end completes receiving of the group of data, the verification color is restored according to the received data information, and a backhaul sending end is configured such that the sending end is used for quick visualization to confirm that the data has no spoofing and tampering.

Optionally, as shown in Fig. 6, this embodiment relates to a plurality of modules, such as a user data information security level color representation interaction module, a user data information security level collection module, a user data decomposition and identification module, a classification data stream generation and parsing module, a level slice data stream control module and a level slice control module.

By way of further example, the present embodiment is mainly directed to the four problems of privacy trace leakage during Internet access, and eavesdropping, spoofing and tampering of data transmission, and solves the described problems from the perspective of underlying data transmission, and the specific steps are as follows:
step S101: a terminal information input interface provides 5 levels of color cards to a user, wherein the color cards indicate a correlation between five levels of slices, such as red corresponds to slice classification L4, orange corresponds to slice classification L3, purple corresponds to slice classification L2, yellow corresponds to slice classification L1 and blue corresponds to slice classification L0; here, the color card is not limited to a monochromic system. A module for completing step S101 may be the user data information security level color representation interaction module in Fig. 6.

Optionally, in the present embodiment, with regard to one segment of information to be sent by the user, the user can set any character, word, sentence, or paragraph to be in any color, and the setting mode is that long-press automatically causes color change, or after content is selected, a color is set by selecting a color card. Transmission forms of a picture, a video and an audio are data, and thus this embodiment is not limited to text information, and is also applicable to multimedia information. With regard to picture and video, the user can delineate a certain display region in a playback display frame and use a slice connection of any one security level for transmission, and can use shapes such as a circle and a square to delineate same, and likewise, the frame body is provided with color of a corresponding security level. For audio, the user may set a security level slice on a playback progress bar, for marking with a corresponding security level color. The described method is still applicable to a streaming media video; and in a local video playback window, the user can delineate a certain display region and transmit same using a slice connection of any security level. With regard to streaming media video and audio, another method that can be used by the user is to use a slice connection of any one security level to set video or audio of one time period for transmission; and when private video and audio are transmitted, a color key corresponding to a corresponding secure slice connection is pressed without loosing, and video and audio in a key holding period can be subjected to data sending by means of the secure slice connection corresponding to the key. A module for completing the color setting may be the user data information security level color representation interaction module as shown in Fig. 6.

Optionally, in the present embodiment, an easy way can also be provided to the user, i.e. automatically setting according to industry big data and automatically setting according to user's habits, wherein automatic setting according to industry big data includes the following aspects:

1-1. Private privacy data of general security criterion: name, telephone number, identification number, address, parents, spouse and children information, user name and password, etc. (the private data is legitimate data that the user is allowed to acquire).

1-2. Industrial high-sensitivity security data: contract, quote, circuit diagram, flowchart, formulation, technical document, etc. (the industrial high-sensitivity security data is valid data that the user is allowed to acquire).

1-3. Security sentence set by the user at a high frequency.

1-4. Automatically setting according to user's habits, that is, when the user selects to automatically set according to habits, the terminal calculates color selection frequencies of a certain sentence, phrase, and word according to histories set by the user, automatically selects color settings with a higher frequencies, and presents same to the user. When it is identified that the user inputs privacy security information (matching according to user's habits or industry big data is successful), the user is prompted, and a security level color setting auxiliary toolbar is automatically popped up, to facilitate setting by the user; or a security level is automatically matched, and the user is provided with an auxiliary toolbar that can be modified. A module for completing the automatic setting according to industry big data and the automatic setting according to the user's habits may be the user data information security level color representation interaction module as shown in Fig. 6.

Step S102: the present embodiment also provides a method for automatically recognizing privacy data and automatically transmitting the privacy data by means of a slice with a high security level, and this means includes:

2-1. Desktop application icons will be set as regions of corresponding colors, different colors correspond to security slices of different levels; and when an application transmits data, a corresponding slice is used by default for data transmission; and if a user identifies region data of a higher level in the application, a slice of a higher level can be used for transmitting calibration data. The system places applications with a payment function in high-level color regions by default. The user may drag applications that he or she deems to require high security levels into higher-level color regions.

2-2. A URL is automatically identified, and when the URL is a website address of a certain bank, a slice connection of a high security level is automatically used, and at the same time, a corresponding color is displayed on a frame.

2-3. An upper-layer data protocol type is automatically identified; and when a webpage is opened and an https protocol is used, a slice connection of a high security level is automatically used, and at the same time, a corresponding color is displayed on a frame.

Step S103: according to color information set by the user, corresponding security level slices are found; and user data information is classified and collected according to the color information. For picture and video data, delineated data can be separated frame by frame, for extracting and classifying data of different color blocks; and for audio data, the data may be extracted and classified according to set time periods. A module for completing step S103 may be the user data information security level collection module as shown in Fig. 6.

Step S104: the data is identified according to a language order, to facilitate decomposition and recombination. Data information is recombined into data streams to be transmitted of several levels according to color levels, which correspond to several levels of slices. A label is set for each piece of data stream, in which the label is hexadecimal data, and the data content is an RGB color representation value. A module for completing step S104 may be the user data decomposition and identification module as shown in Fig. 6.

Step S105: a verification color of data to be sent of the user is presented, wherein the presentation mode may be frame color flickering and color blocks in a screen prompting. A module for completing step S105 may be the user data information security level color representation interaction module as shown in Fig. 6.

Optionally, in the present embodiment, the verification color may be a mixed color, wherein a color mixing calculation formula is:

$$\text{color 1*(color 1-color 2)*(1-percentage of color 1)}$$

color 1: {255, 255, 255}, color 2: {199, 199, 199}

R: 255*(255-199)*(1-percentage of color 1)

G: 255*(255-199)*(1-percentage of color 1)

B: 255*(255-199)*(1-percentage of color 1)

wherein the principle of the color mixing calculation formula includes: every two colors are mixed to generate a new color, and a recursive operation is performed. That is, a first color and a second color are subjected to mixing calculation to obtain a first composite color, the first composite color and a third color are subjected to mixing calculation to obtain a second composite color, and finally a final composite color obtained by mixing all colors is calculated.

A calculation formula for the percentage of colors is:

first color percentage = (number of characters counted for the first color) / (number of characters counted for the first color + number of characters counted for the second color)

second color percentage = (number of characters counted for the second color) / (number of characters counted for the first color + number of characters counted for the second color)

The percentage calculation occurs in pairwise mixed colors. The RGB values in the colors are calculated using the formula, respectively. The final composite color is the verification color.

A module for completing the color mixing calculation is the user data information security level color representation interaction module as shown in Fig. 6.

Step S106: according to each type of label data, a terminal creates a data stream to be transmitted, and embeds classification slice information in the data stream information. A module for completing step S106 may be the classification data stream generation and parsing module as shown in Fig. 6.

Step S107: the terminal initiates a slice connection request of each level to a wireless protocol module URSP, and establishes a slice connection of each level with a network. A module for completing step S107 may be the level slice control module as shown in Fig. 6.

Step S108: the terminal transmits corresponding encrypted data streams in established classification slice connections, respectively, wherein the data stream transmission uses a TCP, and in a TCP handshake procedure, slice information and corresponding color information are exchanged. A module for completing step S108 may be the level slice data stream control module as shown in Fig. 6.

Optionally, in the present embodiment, encryption information and a color field are added in a TCP packet header option section, wherein the data expression manner is:

Slice security classification: value 0 to 1 (occupying 1 byte)

Security RGB: values {0-255, 0-255, 0-255} (occupying 3 bytes)

Step S109: upon receiving the data and the slice information, a receiving end parses, recombines and restores the data stream. A module for completing step S109 may be the classification data stream generation and parsing module as shown in Fig. 6.

Step S110: according to data identification information, secret information is displayed with a color; and the receiving end may select, according to the slice secret level information, to perform secondary processing on relevant sensitive fields, including manners such as burn-after-reading, fuzzy display before authentication by a machine owner, and automatic storage into a secure partition. A module for completing step S110 may be the user data information security level color representation interaction module as shown in Fig. 6.

Step S111: the receiving end uses the calculation method in step S105 to calculate the verification color, and returns the calculated verification color to a sending end, and then the sending end can judge whether the data has been tampered with or impersonated. A module for completing step S111 may be the user data information security level color representation interaction module as shown in Fig. 6.

By the embodiments provided in the present disclosure, the problem of privacy security during user data transmission is solved from the perspective of underlying multichannel transmission; and provided is a method for a user to visually use classification slices, in which the user can very conveniently use secure classification slices to perform hierarchical transmission on private data thereof, which strengthens user privacy protection and data security protection, such that privacy interception, data counterfeit and data tampering become impossible, which increases the security of data transmission of the terminal.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the portion of the technical solution of the present disclosure that contributes in essence or to the related art may be embodied in the form of a software product stored in a storage medium (such as an ROM/RAM, a magnetic disk and an optical disc); and the storage medium includes several instructions to cause a terminal device (which may be a mobile phone, a computer, a server or a network device, etc.) to perform the method according to the various embodiments of the present disclosure.

The present embodiment further provides a data transmission apparatus, wherein the apparatus is configured to implement the described embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

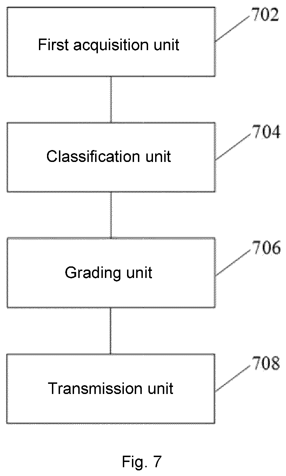

Fig. 7 is a structural block diagram of a data transmission apparatus according to embodiments of the present disclosure. As shown in Fig. 7, the apparatus includes:

a first acquisition unit 702, configured to acquire target data to be transmitted;

a classification unit 704, configured to perform security classification on data content corresponding to the target data, to determine security level information corresponding to at least two parts of content in the data content, wherein the security level information is used for indicating security levels corresponding to the least two parts of content in the data content;

a grading unit 706, configured to determine at least two target network slices from a plurality of network slices of different slice classifications according to the security level information, wherein each of the target network slices is a network slice of which a slice classification matches a security level corresponding to each piece of data content in the at least two parts of content, and network slices of different slice classifications correspond to different security levels; and

a transmission unit 708, configured to perform data transmission on the data content of the target data by means of target network slices, of which the security levels match those of the data content, in the at least two target network slices.

For specific embodiments, reference may be made to the examples shown in the illumination rendering method for a virtual model as described above, and details will not repeated herein in this example.

As an optional solution,
for specific embodiments, reference may be made to the examples shown in the illumination rendering method for a virtual model as described above, and details will not repeated herein in this example.

As an optional solution, the apparatus further includes: an identification unit, configured to identify, before performing security classification on the data content corresponding to the target data to determine security level information corresponding to the at least two parts of content in the data content, the target data by using a target label according to time information associated with the data content, to obtain identified target data, wherein the target label is used for marking data corresponding to each piece of data content of at least two parts of content in the target data.

The apparatus further includes: a recombination unit, configured to decompose and recombine data in the target data according to the target label, to obtain at least two pieces of sub-data, before performing data transmission on the data content of the target data by means of target network slices, of which the security levels match those of the data content, in the at least two target network slices, wherein the sub-data is data corresponding to each piece of data content in the at least two parts of content in the target data.

The transmission unit 708 includes: a transmission module, configured to send the at least two pieces of sub-data to the at least two target network slices respectively, for data transmission.

For specific embodiments, reference may be made to the examples shown in the illumination rendering method for a virtual model as described above, and details will not repeated herein in this example. As an optional solution, the identification unit includes:

a first acquisition module, configured to acquire, when the target data is video data, each frame of video content of the data content, and use the target label to identify video content in each frame of video content that is located within a preset frame selection range, wherein the time information includes information of the preset frame selection range; or

a second acquisition module, configured to acquire, when the target data is audio data, audio content within each time period of the data content, and use the target label to identify audio content, within a preset time period range, of the audio content within each time period, wherein the time information includes information for indicating the preset time period range.

For specific embodiments, reference may be made to the examples shown in the illumination rendering method for a virtual model as described above, and details will not repeated herein in this example. As an optional solution, the classification unit 704, includes: a marking module, configured to perform color marking on each piece of data content to obtain color marking information, wherein the color marking information is used for recording colors marked by all pieces of data content, data content marked with different colors corresponds to different security levels, and the security level information includes the color marking information.

The grading unit 706, includes: a grading module, configured to determine at least two target network slices from the plurality of network slices according to the color marking information.

For specific embodiments, reference may be made to the examples shown in the illumination rendering method for a virtual model as described above, and details will not repeated herein in this example. As an optional solution, the apparatus further includes: a third acquisition module, configured to acquire at least two colors, and perform mixing processing on the at least two colors according to a preset ratio, to obtain a verification color for marking, before performing color marking on each piece of data content to obtain color marking information.

The marking module, includes: a marking sub-module, configured to use the verification color for marking to perform color marking on each piece of data content, to obtain the color marking information.

For specific embodiments, reference may be made to the examples shown in the illumination rendering method for a virtual model as described above, and details will not repeated herein in this example. As an optional solution, the classification unit 704, includes:

a first classification module, configured to perform a manual classification operation on the data content, to obtain the security level information; or

a second classification module, configured to: perform an automatic classification operation on the data content, to obtain the security level information.

For specific embodiments, reference may be made to the examples shown in the illumination rendering method for a virtual model as described above, and details will not repeated herein in this example. As an optional solution, the first classification module includes:

a first operation sub-module, configured to simultaneously or sequentially display, in response to a long-press operation performed on first target data content in the data content, a plurality of slice classifications corresponding to the plurality of network slices; and to determine a first slice classification from the plurality of slice classifications, as a security level corresponding to the first target data content; or

a second operation sub-module, configured to take, in response to a first selection operation performed on second target data content in the data content and a second selection operation performed on a second slice classification in the plurality of slice classifications, the second slice classification as a security level corresponding to the second target data content.

For specific embodiments, reference may be made to the examples shown in the illumination rendering method for a virtual model as described above, and details will not repeated herein in this example. As an optional solution, the first acquisition unit 702, includes: a fourth acquisition module, configured to acquire the target data associated with a target account.

The second classification module, includes:

a first acquisition sub-module, configured to acquire historical security levels corresponding to historical data that has been transmitted of the target account;

a statistics sub-module, configured to perform statistics on the historical data by using the historical security levels, to obtain first key data, wherein the first key data corresponds to multiple times of same or similar historical security levels; and

a prompt sub-module, configured to automatically determine, when the data content includes data content corresponding to the first key data, security levels of the data content corresponding to the first key data included in the data content as the same or similar historical security levels, or to highlight the data content corresponding to the first key data in the data content, and prompt the security levels of the data content corresponding to the first key data to be the same or similar historical security levels.

For specific embodiments, reference may be made to the examples shown in the illumination rendering method for a virtual model as described above, and details will not repeated herein in this example. As an optional solution, the second classification module, includes:

a second acquisition sub-module, configured to acquire data reference information of all pieces of sub-data, wherein the data reference information includes at least one of: data source information, data type information and data protocol information; and

an execution sub-module, configured to perform an automatic classification operation on all pieces of sub-data based on the data reference information, to obtain the security level information.

For specific embodiments, reference may be made to the examples shown in the illumination rendering method for a virtual model as described above, and details will not repeated herein in this example. As an optional solution, the apparatus further includes:

a second acquisition unit, configured to acquire transmission feedback information returned by a first client, after determining at least two target network slices from a plurality of network slices of different slice classifications according to the security level information, wherein the transmission feedback information carries an actual security level corresponding to each piece of sub-data when the first client receives the target data, and the first client is a transmission receiver of the target data; and

a verification unit, configured to verify an actual security level corresponding to each piece of data content and the security level corresponding to each piece of data content, and take data content having a difference in the actual security level as anomalous data content, after determining at least two target network slices from a plurality of network slices of different slice classifications according to the security level information.

For specific embodiments, reference may be made to the examples shown in the illumination rendering method for a virtual model as described above, and details will not repeated herein in this example. As an optional solution, the third acquisition unit is configured to acquire target data subjected to data transmission of different data content by a second client via at least two target network slices, wherein the second client is a transmission sender of the target data, and the at least two target network slices are network slices determined by the second client from a plurality of network slices of different slice classifications according to the security level information; the security level information is obtained by the second client performing security classification on data content corresponding to the target data, and is used for indicating security level information corresponding to least two parts of content in the data content, and each of the target network slices is a network slice of which the slice classification matches a security level corresponding to each piece of data content in the at least two parts of content.

For specific embodiments, reference may be made to the examples shown in the illumination rendering method for a virtual model as described above, and details will not repeated herein in this example.

As an optional solution, the third acquisition unit, includes: a fourth acquisition module, configured to acquire at least two pieces of sub-data transmitted by the at least two target network slices respectively, wherein the sub-data is data corresponding to each piece of data content in the at least two parts of content in the target data.

The apparatus further includes: a parsing module, configured to parse and restore the at least two pieces of sub-data to obtain the target data, and an actual security level corresponding to each piece of data content, after acquiring at least two pieces of sub-data transmitted by the at least two target network slices respectively; and

a verification module, configured to return the actual security level to the second client in the form of transmission feedback information, and verify the actual security level corresponding to each piece of data content and the security level corresponding to each piece of data content by the second client, and take data content having a difference in the actual security level as anomalous data content.

For specific embodiments, reference may be made to the examples shown in the illumination rendering method for a virtual model as described above, and details will not repeated herein in this example.

As an optional solution, for specific embodiments, reference may be made to the examples shown in the illumination rendering method for a virtual model as described above, and details will not repeated herein in this example.

As an optional solution, an execution module, is configured to determine, after parsing and restoring the at least two pieces of sub-data to obtain the target data and an actual security level which corresponds to each piece of data content, important data content of which the actual security level is greater than or equal to a first preset threshold from the at least two pieces of data content, and execute at least one of the following steps on the important data content:

when a display duration of the important data content is greater than or equal to a second preset threshold, the important data content is destroyed;

when a target account which requests to display the important data content is an unauthenticated account, fuzzy displaying is performed on the important data content; and

the important data content is put into a secure partition for storage.

For specific embodiments, reference may be made to the examples shown in the illumination rendering method for a virtual model as described above, and details will not repeated herein in this example.

It should be noted that the modules above can be implemented by software or hardware; for the latter, it may be implemented in the following manner but is not limited thereto: the modules are above all located in the same processor; or all the modules above are located in different processors in any arbitrary combination manner.

Embodiments of the present disclosure further provide a computer-readable storage medium, the computer-readable storage medium storing a computer program; wherein the computer program is configured to execute, when running, the steps in any one of the described method embodiments.

In some exemplary embodiments, the computer-readable storage medium above may include, but is not limited to: all media that can store a computer program, such as a USB flash drive, a Read-Only Memory (ROM for short), a Random Access Memory (RAM for short), a removable hard disk, a magnetic disk, or an optical disc.

Embodiments of the present disclosure further provide an electronic apparatus, including a memory and a processor; wherein the memory stores a computer program, and the processor is configured to run the computer program to execute the steps in any one of the method embodiments.

In some exemplary embodiments, the electronic apparatus can further include a transmission device and an input/output device; wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

It is apparent that a person skilled in the art shall understand that all of the described modules or steps in the present disclosure may be implemented by using a general computing apparatus, may be centralized on a single computing apparatus or may be distributed on a network composed of multiple computing apparatuses, and may be implemented by using executable program codes of the computing apparatus. Thus, they may be stored in a storage apparatus and executed by the computing apparatus, and in some cases, the shown or described steps may be executed in a sequence different from that shown herein, or the modules or steps are manufactured into integrated circuit modules, or multiple modules or steps therein are manufactured into a single integrated circuit module for implementation. Thus, the present disclosure is not limited to any specific hardware and software combinations.

The content above merely relates to preferred embodiments of the present disclosure, and is not intended to limit the present disclosure. For a person skilled in the art, embodiments of the present disclosure may have all modifications and changes. Any modifications, equivalent replacements, improvements, etc. made within the principle of embodiments of the present disclosure shall all fall within the scope of protection of embodiments of the present disclosure.

**Claims**

1. A data transmission method, the method comprising:

acquiring target data to be transmitted;
performing security classification on data content corresponding to the target data, to determine security level information corresponding to at least two parts of content in the data content, wherein the security level information is used for indicating a security level;
determining at least two target network slices from a plurality of network slices having different slice security levels according to the security level information, wherein each of the at least two target network slices is a network slice of which the slice security level matches a security level of each piece of data content in the at least two parts of content; and

transmitting the at least two parts of content of the target data separately by means of target network slices, of which the security levels match those of the at least two parts of content, in the at least two target network slices.

2. The method according to claim 1, wherein

before performing security classification on data content corresponding to the target data, to determine security level information corresponding to at least two parts of content in the data content, the method further comprises: identifying the target data by using a target label according to time information associated with the data content, to obtain identified target data, wherein the target label is used for marking data corresponding to each piece of data content of the at least two parts of content in the target data;

before performing data transmission on the at least two parts of content of the target data by means of target network slices, of which the security levels match those of the at least two parts of content, in the at least two target network slices, the method further comprises: decomposing and recombining the target data according to the target label, to obtain at least two pieces of sub-data, wherein the sub-data is data corresponding to each piece of data content in the at least two parts of content in the target data; and

performing data transmission on the at least two parts of content of the target data by means of target network slices, of which the security levels match those of the at least two parts of content, in the at least two target network slices, comprises: performing data transmission on the at least two pieces of sub-data by means of target network slices, of which the security levels match those of the at least two pieces of sub-data, in the at least two target network slices.

3. The method according to claim 2, wherein identifying the target data by using a target label according to time information associated with the data content, to obtain identified target data, comprises:

acquiring, when the target data is video data, each frame of video content of the data content, and using the target label to identify video content, that is located within a preset frame selection range, in each frame of video content, wherein the time information comprises information of the preset frame selection range; or

acquiring, when the target data is audio data, audio content within each time period of the data content, and using the target label to identify audio content, within a preset time period range, of the audio content within each time period, wherein the time information comprises information for indicating the preset time period range; or

acquiring, when the target data is text data, text content within each byte range of the text content, and using the target label to identify text content, located within a preset byte range, in the text content within each byte range, wherein the time information comprises information for indicating the preset byte range.

4. The method according to claim 1, wherein

performing security classification on data content corresponding to the target data, to determine security level information corresponding to at least two parts of content in the data content, comprises: performing color marking on each piece of data content to obtain color marking information, wherein the color marking information is used for recording colors marked for all pieces of data content, different colors correspond to different security levels, and the security level information comprises the color marking information; and

determining at least two target network slices from a plurality of network slices having different slice security levels according to the security level information, comprises: determining the at least two target network slices from the plurality of network slices according to the color marking information.

5. The method according to claim 4, wherein

before performing color marking on each piece of data content to obtain color marking information, the method further comprises: acquiring at least two colors, and performing mixing processing on the at least two colors according to a preset ratio, to obtain a verification color; and

performing color marking on each piece of data content to obtain color marking information, comprises: using the verification color to perform color marking on each piece of data content, to obtain the color marking information.

6. The method according to claim 4, wherein determining the at least two target network slices from the plurality of network slices according to the color marking information, comprises:

matching colors marked for all pieces of data content and security levels by using a preset mapping relationship, to obtain a security level corresponding to each piece of data content; and

when the slice level corresponding to each network slice in the plurality of network slices is acquired, matching the slice security levels corresponding to all network slices and the security levels corresponding to all pieces of data content, and determining the at least two target network slices from the plurality of network slices.

7. The method according to claim 1, wherein performing security classification on data content corresponding to the target data, to determine security level information corresponding to at least two parts of content in the data content, comprises:

performing a manual classification operation on the data content, to obtain the security level information; or
performing an automatic classification operation on the data content, to obtain the security level information.

8. The method according to claim 7, wherein performing a manual classification operation on the data content, to obtain the security level information, comprises:

simultaneously or sequentially displaying, in response to a long-press operation performed on first target data content in the data content, a plurality of slice classifications corresponding to the plurality of network slices; and determining a first slice classification from the plurality of slice classifications, as a security level corresponding to the first target data content; or
taking, in response to a first selection operation performed on second target data content in the data content and a second selection operation performed on a second slice classification in the plurality of slice classifications, the second slice classification as a security level corresponding to the second target data content.

9. The method according to claim 7, wherein

acquiring target data to be transmitted, comprises: acquiring the target data associated with a target account; and performing an automatic classification operation on the data content, to obtain the security level information, comprises:

acquiring historical security levels corresponding to historical data that has been transmitted of the target account;
performing statistics on the historical data by using the historical security levels, to obtain first key data, wherein the first key data corresponds to multiple times of same or similar historical security levels; and automatically determining, when the data content comprises data content corresponding to the first key data, security levels of the data content corresponding to the first key data comprised in the data content as the same or similar historical security levels, or highlighting the data content corresponding to the first key data in the data content, and prompting the security levels of the data content corresponding to the first key data to be the same or similar historical security levels.

10. The method according to claim 7, wherein performing an automatic classification operation on the data content, to obtain the security level information, comprises:

acquiring data reference information of all pieces of sub-data, wherein the data reference information comprises at least one of: data source information, data type information and data protocol information; and performing an automatic classification operation on all pieces of sub-data based on the data reference information, to obtain the security level information.

11. The method according to any one of claims 1 to 10, wherein after determining at least two target network slices from a plurality of network slices of different slice classifications according to the security level information, the method further comprises:

acquiring transmission feedback information returned by a first client, wherein the transmission feedback information carries an actual security level corresponding to each piece of sub-data when the first client receives the target data, and the first client is a transmission receiver of the target data; and verifying the actual security level corresponding to each piece of data content and the security level corresponding to each piece of data content, and taking data content having a difference in the actual security level as anomalous data content.

12. A data transmission method, comprising:

acquiring target data subjected to data transmission of different data content by a second client via at least two target network slices, wherein the second client is a transmission sender of the target data, and the at least two target network slices are network slices determined by the second client from a plurality of network slices of different slice classifications according to security level information; the security level information is obtained by the second client performing security classification on data content corresponding to the target data, and is used for indicating security level information corresponding to least two parts of content in the data content, and each of the at least two target network slices is a network slice of which the slice classification matches a security level corresponding to each piece of data content in the at least two parts of content.

13. The method according to claim 12, wherein

acquiring target data subjected to data transmission of different data content by a second client via at least two target network slices, comprises: acquiring at least two pieces of sub-data transmitted by the at least two target network slices respectively, wherein the sub-data is data corresponding to each piece of data content in the at least two parts of content in the target data; and

after acquiring at least two pieces of sub-data transmitted by the at least two target network slices respectively, the method further comprises: parsing and restoring the at least two pieces of sub-data, to obtain the target data, and an actual security level corresponding to each piece of data content; and

returning the actual security level to the second client in the form of transmission feedback information, and verifying, by the second client, the actual security level corresponding to each piece of data content and the security level corresponding to each piece of data content, and taking data content having a difference in the actual security level as anomalous data content.

14. The method according to claim 13, wherein after parsing and restoring the at least two pieces of sub-data, to obtain the target data, and an actual security level corresponding to each piece of data content, the method further comprises: determining important data content of which the actual security level is greater than or equal to a first preset threshold from the at least two pieces of data content, and executing at least one of the following steps on the important data content:

destroying the important data content when a display duration of the important data content is greater than or equal to a second preset threshold;

performing fuzzy displaying on the important data content when a target account which requests to display the important data content is an unauthenticated account; and

putting the important data content into a secure partition for storage.

15. A computer-readable storage medium, having a computer program stored therein, wherein the computer program, when executed by a processor, implements the steps of the method according to any one of claims 1 to 14.

16. An electronic device, comprising a memory, a processor, and a computer program stored on the memory and executable on the processor, wherein the processor implements the steps of the method according to any one of claims 1 to 14 when executing the computer program.

Input/output device  108 | Transmission device
106

Processor102

Memory
104

Fig. 1

Fig. 2

Network slice A, security level 1

Network slice B, security level 2

Network slice C, security level 3

Sub-data 1,security level 1

Sub-data 2,security level 2

Sub-data 3,security level 3

Target data 302

Fig. 3

Security level 1

Security level 2

Security level 3

Sub-data 1

Fig. 4

Red

Orange

Purple

Security level 1

Security level 2

Security level 3

Sub-data 1

Fig. 5

| User data information security level color representation interaction module | User data information security level collection module | User data decomposition and identification module |
|---|---|---|

| Classification data stream generation and parsing module | Level slice data stream control module | Level slice control module |
|---|---|---|

Fig. 6

First acquisition unit — 702

Classification unit — 704

Grading unit — 706

Transmission unit — 708

Fig. 7

## INTERNATIONAL SEARCH REPORT

| International application No. |
| --- |
| **PCT/CN2024/107934** |

### A. CLASSIFICATION OF SUBJECT MATTER

H04L9/40(2022.01)i

According to International Patent Classification (IPC) or to both national classification and IPC

### B. FIELDS SEARCHED

Minimum documentation searched (classification system followed by classification symbols)

IPC:H04L9/-

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; IEEE; CNKI; 3GPP: 网络, 切片, 安全, 保密, 数据, 业务, 等级, 级别, 标签, 标识, 优先级, network, slic+, secur+, confidential, data, service, level, class, label, identif+, priority

### C. DOCUMENTS CONSIDERED TO BE RELEVANT

| Category* | Citation of document, with indication, where appropriate, of the relevant passages | Relevant to claim No. |
| --- | --- | --- |
| A | CN 115720376 A (VIVO COMMUNICATION TECHNOLOGY CO., LTD.) 28 February 2023 (2023-02-28) <br> entire document | 1-16 |
| A | CN 109257744 A (GUANGDONG UNIVERSITY OF TECHNOLOGY) 22 January 2019 (2019-01-22) <br> entire document | 1-16 |
| A | CN 112399609 A (CHINA UNITED NETWORK COMMUNICATIONS GROUP CO., LTD.) 23 February 2021 (2021-02-23) <br> entire document | 1-16 |
| A | CN 112804679 A (ZTE CORP.) 14 May 2021 (2021-05-14) <br> entire document | 1-16 |
| A | WO 2017200978 A1 (IDAC HOLDINGS, INC.) 23 November 2017 (2017-11-23) <br> entire document | 1-16 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 September 2024** | **24 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/107934** |

| Patent document cited in search report | | | Publication date (day/month/year) | Patent family member(s) | | | Publication date (day/month/year) |
| --- | --- | --- | --- | --- | --- | --- | --- |
| CN | 115720376 | A | 28 February 2023 | None | | | |
| CN | 109257744 | A | 22 January 2019 | CN | 109257744 | B | 26 November 2021 |
| CN | 112399609 | A | 23 February 2021 | CN | 112399609 | B | 11 August 2023 |
| CN | 112804679 | A | 14 May 2021 | CN | 112804679 | B | 14 July 2023 |
| | | | | WO | 2022142740 | A1 | 07 July 2022 |
| | | | | EP | 4247050 | A1 | 20 September 2023 |
| | | | | EP | 4247050 | A4 | 24 April 2024 |
| | | | | JP | 2023552361 | W | 15 December 2023 |
| | | | | JP | 7499971 | B2 | 14 June 2024 |
| | | | | US | 2024031928 | A1 | 25 January 2024 |
| | | | | IN | 202317040997 | A | 26 July 2024 |
| WO | 2017200978 | A1 | 23 November 2017 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023110276229